# DEMANDE DE BREVET EUROPEEN

(11) **EP 1 236 915 A1**
(43) Date de publication de la demande: **04.09.2002**
(21) Numéro de dépôt: 02290366.0
(22) Date de dépôt: 14.02.2002
(51) Int. Cl.: F16C 33/66, F16C 33/41

(54) **Cage à réserve de substance lubrifiante**

(30) Priorité: 01.03.2001 FR 0102822
(71) Demandeur: S.N.R. ROULEMENTS, 74010 Annecy Cédex (FR)
(72) Inventeur: Compassi, Jean-Jacques, 74960 Cran-Gevrier (FR)
(74) Mandataire: Srour, Elie

(57) **Abrégé**

La présente invention concerne une cage (1) à réserve de substance lubrifiante, notamment pour des roulements opérant en ambiance dépressurisée, comportant, entre deux alvéoles (3) de corps roulant, au moins une réserve de substance lubrifiante, la réserve comprenant au moins un débouché sensiblement radial ou tangentiel de cette substance.

La cage (1) est remarquable en ce que la réserve comporte en outre une ouverture (26) débouchant selon l'axe (A) de la cage (1).

## Description

La présente invention concerne une cage à réserve de substance lubrifiante, notamment pour des roulements opérant en ambiance dépressurisée, du type comportant, entre deux alvéoles de corps roulant, au moins une réserve de substance lubrifiante, ladite réserve comprenant au moins un débouché sensiblement radial ou tangentiel de ladite substance.

Les roulements dits étanches sont généralement lubrifiés par une substance lubrifiante remplissant en partie le volume libre entre les corps roulants. La quantité de substance lubrifiante disponible dans ce volume libre influe directement sur la durée de vie du roulement.

Mais un pourcentage de remplissage du volume libre trop élevé conduit à un échauffement du roulement et à des fuites.

Dans des conditions d'utilisation du roulement telles que la durée de vie du roulement est limitée par l'insuffisante lubrification et non par les contraintes physiques que doivent supporter les corps roulants, le nombre de corps roulants du roulement peut être réduit afin d'augmenter la quantité de substance lubrifiante dans le roulement sans accroître le pourcentage de remplissage.

Dans certaines conditions d'utilisation du roulement, par exemple dans une ambiance dépressurisée tendant à vaporiser les substances lubrifiantes habituelles, la quantité de substance lubrifiante reste néanmoins le facteur limitant de la durée de vie du roulement.

Pour accroître la durée de vie du roulement, on a recours à des substances lubrifiantes spéciales très performantes, à consommation lente, et à des billes céramiques à très faible coefficient de frottement. Les substances lubrifiantes spéciales sont cependant très coûteuses.

Le document JP 61140616 propose, pour réduire le recours à de telles substances lubrifiantes, de diffuser régulièrement dans le roulement une substance lubrifiante plus classique mise préalablement en réserve dans une cage de roulement. Entre deux corps roulants successifs, la cage forme un pont comportant une cavité contenant de la substance lubrifiante. La cavité communique avec le volume dans lequel les corps roulants se déplacent par un unique orifice étroit orienté de la cavité vers le chemin de roulement porté par la bague extérieure du roulement.

Quand les corps roulants tournent, la substance lubrifiante est progressivement expulsée, sous l'effet de la force centrifuge, de la cavité vers le chemin de roulement porté par la bague extérieure. En roulant sur ce chemin, les corps roulants dispersent la substance lubrifiante entre les deux bagues du roulement.

La substance lubrifiante en réserve n'augmentant pas le taux de remplissage, elle ne participe pas à l'échauffement du roulement. Sa diffusion régulière permet néanmoins d'augmenter la durée de vie du roulement.

La fabrication d'une telle cage est complexe. Un procédé de moulage classique ne permet pas en effet de créer une cavité pratiquement fermée. La cage doit donc être fabriquée au moyen de deux pièces assemblées.

De même, une opération de moulage ne peut permettre de réaliser un orifice dans la cavité.

En outre, la diffusion de la substance lubrifiante génère une dépression à l'intérieur de la chambre qui nuit à une diffusion régulière de la substance lubrifiante.

Le but de la présente invention est de fournir une cage à réserve de substance lubrifiante simple à fabriquer et permettant une diffusion plus régulière de la substance lubrifiante.

On atteint ce but avec une cage à réserve de substance lubrifiante du type précité, remarquable en ce que ladite réserve comporte en outre une ouverture débouchant selon l'axe de ladite cage.

Comme on le verra dans la description qui va suivre, cette forme facilite la fabrication de la cage.

L'ouverture permet en outre à la substance lubrifiante contenue dans l'enfoncement de rester en permanence à la pression environnante. Aucune dépression ne se forme au sein de la substance lubrifiante contenue dans la réserve. La substance lubrifiante peut donc se diffuser régulièrement entre les deux bagues de roulement.

Selon d'autres caractéristiques de la présente invention,
- ladite réserve a la forme d'un enfoncement comportant un fond sensiblement perpendiculaire audit axe de ladite cage, et une paroi latérale sensiblement perpendiculaire audit fond,
- ladite réserve a la forme d'un enfoncement s'évasant depuis son fond jusqu'à ladite ouverture,
- ledit débouché est sensiblement radial et a la forme d'une encoche s'étendant à partir de ladite ouverture, ce qui permet de réaliser l'enfoncement et l'encoche dans une même opération de moulage,
- ladite réserve comporte une pluralité d'encoches partageant une face extérieure de ladite réserve en portions de surfaces sensiblement identiques,
- ledit débouché est tangentiel et débouche dans une desdites alvéoles.

La présente invention se rapporte également à un procédé de fabrication d'une cage par moulage dans un moule à deux mâchoires mobiles l'une par rapport à l'autre suivant un même axe, caractérisé en ce qu'on ouvre ledit moule suivant ledit axe de ladite cage formée dans ledit moule.

La présente invention se rapporte enfin à un roulement remarquable en ce qu'il comporte une cage selon l'invention.

D'autres caractéristiques et avantages de la présente invention apparaîtront à la lecture de la description qui va suivre et à l'examen du dessin dans lequel :
- la figure 1 illustre une vue en perspective d'un détail d'une cage selon le mode de réalisation préféré de la présente invention,
- la figure 2 illustre une vue de dessus d'une cage selon le mode de réalisation préféré de la présente invention,
- la figure 3 illustre un détail de la section rabattue selon la ligne B de la cage représentée sur la figure 2.

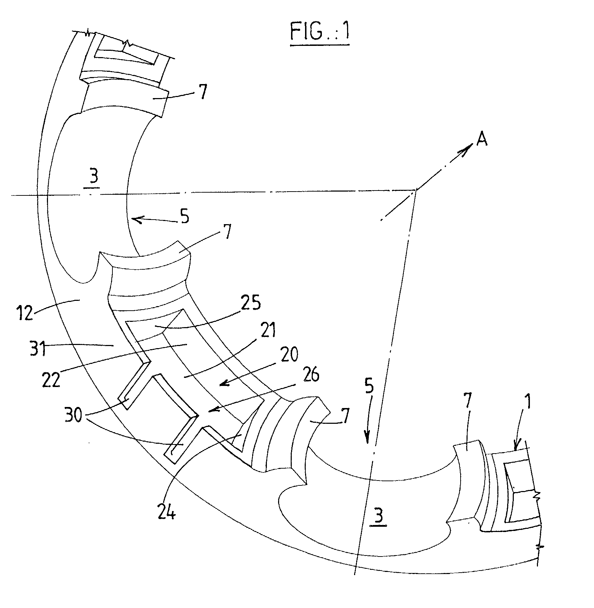

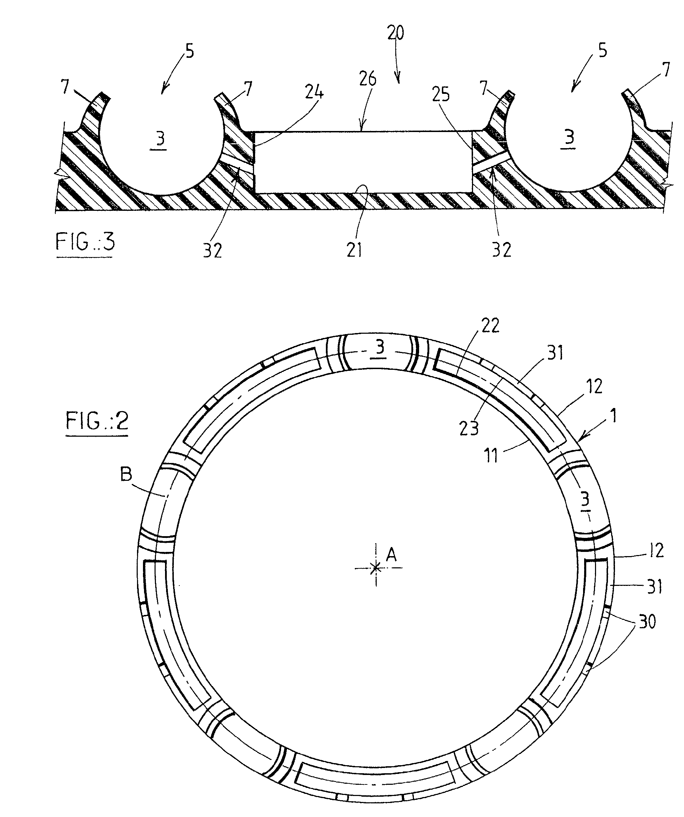

La cage 1 illustrée par les figures 1 et 2, a la forme générale d'un anneau fermé d'axe A. Elle peut être par exemple en polyamide. Des alvéoles 3, réparties le long de la cage 1, sont formées pour recevoir et maintenir, au moyen de languettes 7 flexibles, des billes, non représentées.

La largeur radiale de la cage 1 est inférieure au diamètre d'une bille de manière qu'en position montée de la bille, la bille déborde radialement du bord intérieur 11 de la cage 1, visible sur la figure 2, c'est-à-dire vers l'axe A de la cage 1, et du bord extérieur 12 de la cage 1, c'est-à-dire du côté de la cage 1 opposé à l'axe A.

Entre deux alvéoles 3, la cage 1 comporte un enfoncement 20, par exemple, selon le mode de réalisation préféré de l'invention, à cinq faces :
- une face formant un fond 21 de l'enfoncement 20, le fond 21 étant sensiblement plat et sensiblement perpendiculaire à l'axe A de la cage 1,
- des faces intérieure 22 et extérieure 23 sensiblement parallèles l'une à l'autre, la face intérieure 22 étant plus proche de l'axe A que la face extérieure 23, et
- deux faces latérales 24 et 25 appartenant à des plans radiaux et étant orientées vers chacune des deux dites alvéoles 3.

La face extérieure 23 est représentée sur la figure 2.

Les faces intérieure 22 et extérieure 23 et les faces latérales 24 et 25 délimitent la paroi latérale de l'enfoncement 20. Dans le mode de réalisation préféré de l'invention, cette paroi latérale est sensiblement perpendiculaire au fond 21.

Une ouverture 26 de l'enfoncement 20 est sensiblement orientée selon l'axe A de la cage 1, par exemple du même côté de la cage 1 que l'ouverture 5 des alvéoles 3.

La forme et la disposition des faces de l'enfoncement 20 pourrait être différente. Par exemple, l'enfoncement 20 pourrait avoir une forme sensiblement cylindrique.

Dans un autre mode de réalisation, l'enfoncement 20 a une forme évasée depuis le fond 21 jusqu'à l'ouverture 26. Par exemple, les faces des deux couples de faces opposées de l'enfoncement 20, c'est-à-dire le couple des faces latérales 24 et 25 et le couple des faces intérieure 22 et extérieure 23, s'écartent l'une de l'autre depuis le fond 21 jusqu'à l'ouverture 26. Une demi-sphère ou un cône constituent d'autres exemples de formes évasées.

Une caractéristique importante de la forme de l'enfoncement 20 est la possibilité qu'elle offre de démoulage de la cage 1 selon l'axe A.

On notera cependant qu'un faible retour de matière fermant partiellement l'ouverture 26 peut être acceptable dans la mesure de l'élasticité de la matière utilisée pour constituer la cage 1.

Une substance lubrifiante est introduite dans l'enfoncement 20 par l'ouverture 26.

Le volume des enfoncements 20 permet d'augmenter les réserves de substance lubrifiante mais conduit à une diminution du nombre de billes dans le roulement. Un compromis doit donc être déterminé entre volume des enfoncements 20 et le nombre de billes du roulement.

Dans le mode de réalisation préféré de l'invention, le nombre de billes est réduit, par exemple à cinq, de manière à augmenter la quantité de substance lubrifiante pouvant être introduite dans le roulement.

La face extérieure 23 de l'enfoncement 20 comporte au moins une encoche 30.

L'encoche 30 traverse une paroi extérieure 31 de l'enfoncement 20 s'étendant entre la face extérieure 23 de l'enfoncement 20 et la face extérieure 12 de la cage 1.

Grâce à l'encoche 30, la substance lubrifiante contenue dans l'enfoncement 20 peut traverser la paroi extérieure 31 de l'enfoncement 20 et transiter de l'enfoncement 20 à un espace compris entre la face extérieure 12 de la cage 1 et une bague extérieure du roulement, non représentée. Il est bien connu qu'un roulement comprend en outre une bague intérieure, également non représentée.

Une encoche 30 s'étend de préférence sur toute la hauteur de la face extérieure 23, c'est-à-dire de l'ouverture 26 au fond 21 de l'enfoncement 20.

A titre d'exemple, le nombre d'encoches 30 est de deux et les deux encoches 30 partagent la face extérieure 23 en trois portions de surfaces sensiblement identiques.

La forme des encoches 30, sensiblement rectangulaire dans le mode de réalisation préféré de l'invention, peut être adaptée en fonction du débit désiré de substance lubrifiante.

Par exemple, un élargissement d'une encoche 30 au voisinage du fond 21 de l'enfoncement 20 permet de prendre en compte une baisse de niveau de substance lubrifiante dans l'enfoncement 20 au cours de la vie du roulement et donc de maintenir, voire d'augmenter, le débit de substance lubrifiante expulsée par l'encoche 30 en fin de vie du roulement.

L'élargissement d'une encoche 30 au voisinage du fond 21 de l'enfoncement 20 et la présence des languettes 7 fermant en partie une alvéole 3 s'oppose au démoulage de la cage 1 selon l'axe A. La matière de la cage 1 est cependant suffisamment élastique pour que la cage 1 se déforme sans se casser lors du démoulage, puis retrouve sa forme initiale après démoulage.

La figure 3 illustre une variante de la cage 1 selon la présente invention. Selon cette variante, les encoches 30 sont supprimées et remplacées par au moins un conduit 32 constituant un débouché tangentiel de la substance lubrifiante. Le conduit 32 débouche d'un côté sur une des faces latérales 24 et 25 de l'enfoncement 20, de l'autre côté à l'intérieur d'une alvéole 3. La fabrication des conduits 32 est cependant complexe et ne peut être réalisée par une opération de moulage de la cage 1. Le conduit 32 peut également coexister avec une ou plusieurs encoches 30.

Le remplissage, au moins partiel, des enfoncements 20 de substance lubrifiante, par exemple d'une graisse ou d'un lubrifiant solide, peut être effectué indépendamment du montage des billes du roulement. L'ouverture 26, axiale, facilite ce remplissage.

Quand les bagues intérieure et extérieure du roulement tournent l'une par rapport à l'autre, les billes roulent et entraînent la cage 1. La substance lubrifiante introduite dans un enfoncement 20 subit une force centrifuge qui la pousse vers les encoches 30, Les dimensions et le nombre des encoches 30 ainsi que la viscosité de la substance lubrifiante sont choisis en fonction des conditions dans lesquelles le roulement est utilisé, par exemple en fonction de la vitesse de rotation, de l'ambiance et de la sollicitation des bagues, afin de réguler au mieux la distribution de la substance lubrifiante et d'optimiser ainsi la durée de vie du roulement.

Dans le mode de réalisation illustré par la figure 3 où les encoches 30 sont remplacées par des conduits 32, ce sont les accélérations et les décélérations de la cage 1 qui génèrent une force d'expulsion de la substance lubrifiante vers les alvéoles 3.

La bille présente à l'embouchure d'un conduit 32 constitue un obstacle à l'écoulement de la substance lubrifiante. Cet obstacle est pris en compte dans la détermination du diamètre des conduits 32.

La forte viscosité de la substance lubrifiante lui permet de ne pas sortir de l'enfoncement 20 par l'ouverture 26 sous la seule force de la gravité. De préférence, l'ouverture 26 est cependant orientée vers le haut, de préférence encore verticalement.

La substance lubrifiante expulsée est diffusée sur toutes les surfaces de frottement par la rotation des billes.

L'ouverture 26 de l'enfoncement 20 permet à de l'air à la pression ambiante d'occuper les volumes laissés vacants dans l'enfoncement 20 par l'expulsion de substance lubrifiante. Il n'y a donc pas de poche de vide au sein de la substance lubrifiante susceptible de nuire à la régularité de l'expulsion de la substance lubrifiante.

La régularité de l'expulsion de la substance lubrifiante obtenue permet de contrôler efficacement le volume de substance lubrifiante délivré au cours de la vie du roulement à l'aide des formes particulières des encoches 30.

Comme cela apparaît clairement à présent, la présente invention fournit une cage 1 à réserve de substance lubrifiante simple à fabriquer, particulièrement selon le mode de réalisation préféré. La cage 1 peut en effet être moulée d'une seule pièce, sans perçage ultérieur d'orifices ou de conduits.

Bien entendu, l'invention n'est pas limitée au mode de réalisation décrit et représenté fourni à titre d'exemple illustratif et non limitatif.

Par exemple, l'orientation des enfoncements 20, leur nombre et leurs emplacements sur la cage 1, le nombre, la forme et l'emplacement des encoches 30 ou des conduits 32 pourraient être modifiés. Des corps roulants autres que des billes pourraient également être utilisés.

## Revendications

1. Cage (1) à réserve de substance lubrifiante, notamment pour des roulements opérant en ambiance dépressurisée, comportant, entre deux alvéoles (3) de corps roulant, au moins une réserve de substance lubrifiante, ladite réserve comprenant au moins un débouché sensiblement radial ou tangentiel de ladite substance,
**caractérisée en ce que** ladite réserve comporte en outre une ouverture (26) débouchant selon l'axe (A) de ladite cage (1).

2. Cage selon la revendication 1, **caractérisée en ce que** ladite réserve a la forme d'un enfoncement (20) comportant un fond (21) sensiblement perpendiculaire audit axe (A) de ladite cage (1), et une paroi latérale (22,23,24,25) sensiblement perpendiculaire audit fond (21).

3. Cage selon la revendication 1, **caractérisée en ce que** ladite réserve a la forme d'un enfoncement (20) s'évasant depuis son fond (21) jusqu'à ladite ouverture (26).

4. Cage selon l'une quelconque des revendications précédentes, **caractérisée en ce que** ledit débouché est sensiblement radial et a la forme d'une encoche (30) s'étendant à partir de ladite ouverture (26).

5. Cage selon la revendication 4, **caractérisée en ce que** ladite réserve comporte une pluralité d'encoches (30) partageant une face extérieure (23) de ladite réserve en portions de surfaces sensiblement identiques.

6. Cage selon l'une quelconque des revendications précédentes, **caractérisée en ce que** ledit débouché est tangentiel et débouche dans une desdites alvéoles (3).

7. Procédé de fabrication d'une cage (1) selon l'une quelconque des revendications précédentes, par moulage dans un moule à deux mâchoires mobiles l'une par rapport à l'autre suivant un même axe, **caractérisé en ce qu'**on ouvre ledit moule suivant ledit axe (A) de ladite cage (1) formée dans ledit moule.

8. Roulement **caractérisé en ce qu'**il comporte une cage selon l'une quelconque des revendications 1 à 6.
